# EUROPÄISCHE PATENTSCHRIFT

(11) **EP 0 426 950 B1**
(45) Veröffentlichungstag und Bekanntmachung des Hinweises auf die Patenterteilung: **02.11.1994**
(21) Anmeldenummer: 90114783.5
(22) Anmeldetag: 01.08.1990
(51) Int. Cl.: F16L 23/14, F16L 9/22

(54) **Blechkanalformstück**
Profiled parts for a sheet metal canal
Pièce profilée pour un canal en tôle

(30) Priorität: 10.11.1989 DE 3937524
(43) Veröffentlichungstag der Anmeldung: 15.05.1991
(73) Patentinhaber: Grundner, Peter, D-84419 Obertaufkirchen (DE)
(72) Erfinder: Grundner, Peter, D-84419 Obertaufkirchen (DE)
(74) Vertreter: Goetz, Rupert, Dipl.-Ing.

(56) Entgegenhaltungen:
- DE-A- 2 011 054
- DE-U- 1 939 287
- DE-U- 8 205 068
- DK-C- 128 694

## Beschreibung

Die Erfindung betrifft ein Blechkanalformstück mit mindestens zwei übereck angeordneten Kanalwänden und aus diesen stirnseitig nach außen abgekanteten Flanschen, die in einer gemeinsamen Ebene liegen und durch je eine Endkante begrenzt sind, sowie einem Eckstück, das eine Lücke zwischen benachbarten Flanschen ausfüllt und mit jedem von ihnen an dessen Endkante verlötet oder verschweißt ist.

Bei solchen Blechkanalformstücken, die beispielsweise aus der US-PS 4328981 und der DE-PS 3704633 bekannt sind, ergibt es sich beim Abkanten der Kanalwände von selbst, daß deren Flansche durch Endkanten begrenzt sind, die sich im rechten Winkel zur Ebene der zugehörigen Kanalwand erstrecken. Da die übereck angeordneten Kanalwlinde üblicherweise einen Winkel von 90° miteinander einschließen, ergibt sich aus der rechtwinkligen Anordnung der Endkanten der Flansche, daß jedes Eckstück, mit dem die Lücke zwischen benachbarten Flanschen ausgefüllt wird, die Grundform eines Quadrats hat. Die Kanten, an denen das Eckstück üblicherweise stumpf mit den Endkanten der benachbarten Flansche verlötet oder verschweißt ist, erstrecken sich also im rechten Winkel zueinander in Verlängerung je einer Abkantung zwischen einer Kanalwand und dem zugehörigen Flansch.

Erfahrungsgemäß gelingt es selbst bei sorgfältig vorbereitetem und durchgeführtem Verlöten oder Verschweißen der stirnseitigen Flansche bekannter Blechformstücke mit dem zwischen ihnen angeordneten Eckstück meist nicht, die beiden Flansche und das Eckstück genau in einer gemeinsamen Ebene zu halten. Sind die Flansche und das Eckstück erst einmal miteinander verlötet oder verschweißt, dann ist es äußerst schwierig, wenn nicht unmöglich, sie noch derart auszurichten, daß sie eine gemeinsame ebene Stirnfläche des Kanalformstücks bilden. Infolgedessen gelingt es häufig nicht, aneinander anschließende Blechkanalformstücke über ihre Flansche vollständig dicht miteinander zu verschrauben oder zu verklammern. In solchen Fällen müssen die Flansche dann noch durch zusätzliche Maßnahmen, beispielsweise durch Verlöten oder Verschweißen, gegeneinander abgedichtet werden, was unter beengten Einbauverhältnissen sehr schwierig sein kann und jedenfalls kostspielig ist.

Der Erfindung liegt deshalb die Aufgabe zugrunde, ein Blechkanalstück mit übereck angeordneten Kanalwänden und zugehörigen stirnseitigen Flanschen sowie einem versteifenden Eckstück, das zwischen je einem Paar benachbarter Flansche eingelötet oder eingeschweißt wird, derart zu gestalten, daß es bei der Herstellung des Blechkanalformstücks leichter und zuverlässiger als bisher gelingt, die Flansche und das Eckstück genau in einer gemeinsamen Ebene anzuordnen.

Die Aufgabe ist erfindungsgemäß bei einem Blechkanalformstück der eingangs beschriebenen Gattung dadurch gelöst, daß die Endkanten benachbarter Flansche mit den Ebenen der zugehörigen Kanalwände je einen spitzen Winkel einschließen und auf einer gemeinsamen Geraden liegen.

Die stirnseitigen Flansche sind also an ihren einander benachbarten Enden derart abgeschrägt, daß die Fläche jedes Flansches vermindert und ein dementsprechend größeres Eckstück erforderlich ist, um die Flansche miteinander zu verbinden. Zum Herstellen des Eckstücks ist deshalb zwar etwas mehr Blech erforderlich als nach dem Stand der Technik; dies ist aber ohne Bedeutung, da beim Herstellen gattungsgemäßer Blechformstücke stets Blechabfälle übrigbleiben, aus denen sich Eckstücke für erfindungsgemäße Blechkanalformstücke herstellen lassen. Wesentlich ist, daß bei dem erfindungsgemäßen Blechkanalformstück die einander benachbarten stirnseitigen Flansche durch ihre schrägen Verbindungsnähte mit dem Eckstück wirksamer als bisher versteift und genauer als bisher in einer gemeinsamen Ebene gehalten werden.

Daß die Endkanten benachbarter Flansche auf einer gemeinsamen Geraden liegen, bedeutet, daß die beiden Winkel zwischen der Endkante je eines Flansches und der Ebene der jeweils zugehörigen Kanalwand sich mit dem Winkel zwischen den beiden übereck angeordneten Kanalwänden zu einem Gesamtwinkel von 180° ergänzen. Das Eckstück hat dementsprechend die Grundform eines Dreiecks, das mit seiner Basis an den Endkanten der beiden zugehörigen Flansche angelötet oder angeschweißt ist. Die Löt- oder Schweißnaht ist also ebenfalls gerade, soweit sie sich in der Flanschebene erstreckt. Dadurch wird die Herstellung und ein etwa erforderliches nachträgliches Überschleifen der Schweißnaht im Vergleich zum Stand der Technik erleichtert.

Besonders vorteilhaft ist es, wenn das Eckstück die Grundform eines gleichschenkligen Dreiecks hat. Dies bedeutet bei einer üblichen rechtwinkligen Eckverbindung, daß die Endkante jedes stirnseitigen Flansches mit der Ebene der zugehörigen Kanalwand einen Winkel von 45° einschließt.

Aus der DK-A 128 694 ist ein Blechkanalstück mit übereck angeordneten Kanalwänden und aus diesen stirnseitig nach außen abgekanteten Flanschen bekannt, die in einer gemeinsamen Ebene liegen und durch je eine Endkante begrenzt sind, die mit der Ebene der zugehörigen Kanalwand einen spitzen Winkel von ungefähr 75° bildet. Die Lücke zwischen diesen Endkanten wird von einem Eckstück ausgefüllt, von dem zwei in einer gemeinsamen Ebene rechtwinklig zueinander angeordnete Schenkel und eine längs deren Winkelhalbierenden angeordnete schmale Lasche ausgehen. Die beiden Schenkel werden an die Unterseite je eines Flansches angelegt, und die Lasche wird im Scheitelbereich zwischen den Kanalwänden umgebogen. Mit dieser Anordnung des Eckstücks und seiner Lasche soll erreicht werden, daß das Blechkanalformstück mit einem benachbarten Formstück gleicher Art dicht zusammengefügt werden kann.

Ein Ausführungsbeispiel der Erfindung wird im folgenden anhand schematischer Zeichnungen mit weiteren Einzelheiten erläutert. Es zeigen:
- Fig. 1: ein Stück eines Blechkanals, der unter anderem aus zwei erfindungsgemäßen Blechkanalformstücken zusammengesetzt ist, und
- Fig. 2: den Ausschnitt II aus Fig. 1 in größerem Maßstab.

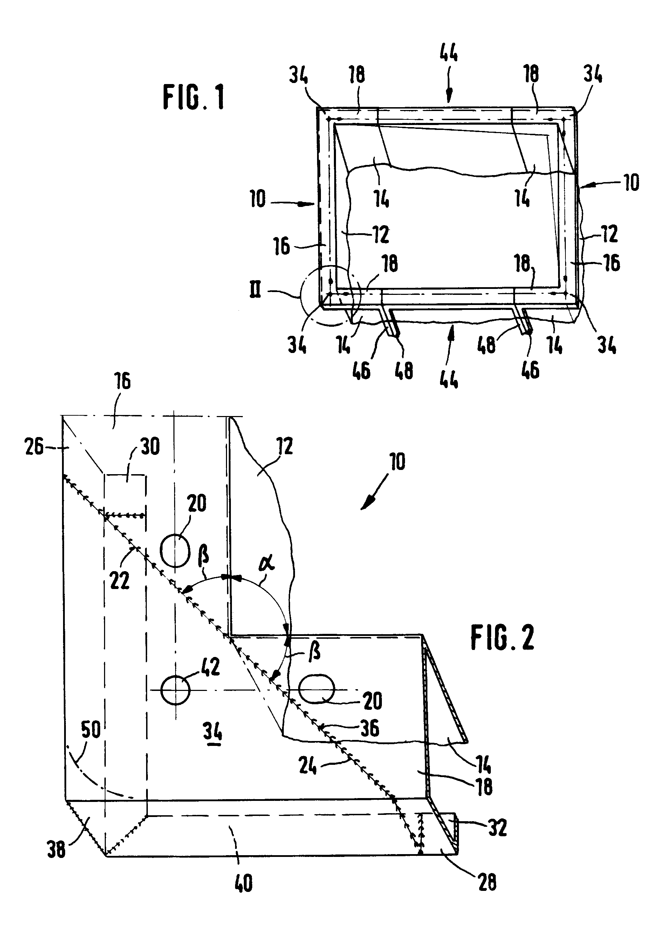

Gemäß Fig. 1 sind zwei U-förmige Blechkanalformstücke 10 einander gegenüber angeordnet. Jedes dieser Blechkanalformstücke 10 hat zwei Kanalwände 12 und 14, die aus einer gemeinsamen Blechplatte unter einem Winkel α von im dargestellten Beispiel 90° abgekantet sind und je einen stirnseitig nach außen abgekanteten Flansch 16 bzw. 18 aufweisen. Die beiden Flansche 16 und 18 liegen in einer gemeinsamen Ebene und sind zum Verschrauben mit einem nicht dargestellten benachbarten Blechkanalformstück mit Langlöchern 20 versehen. Jeder der Flansche 16 und 18 hat eine Endkante 22 bzw. 24, die sich unter einem Winkel β von im dargestellten Beispiel 45° zur Ebene der zugehörigen Kanalwand 12 bzw. 14 erstreckt.

Das Blech, aus dem die Kanalwände 12 und 14 sowie die Flansche 16 und 18 abgekantet sind, kann an den parallel zu den Kanalwänden verlaufenden Rändern der Flansche enden; dies gilt vor allem, wenn die Flansche rückseitig durch einen Profilrahmen od.dgl. versteift sind. Beim dargestellten Beispiel sind die Flansche 16 und 18 jedoch durch je einen mit ihnen aus einem Stück bestehenden, aus der Flanschebene abgekanteten Steg 26 bzw. 28 versteift, der in einer zur Ebene der zugehörigen Kanalwand 12 bzw. 14 parallelen Ebene liegt. Die Stege 26 und 28 sind ihrerseits durch je eine rechtwinklig nach innen gerichtete Abkantung 30 bzw. 32 versteift.

Mit den Endkanten 22 und 24 der beiden Flansche 16 und 18 ist ein Eckstück 34 von der Grundform eines gleichschenkligen Dreiecks mit seiner Basis 36 durch Hartlöten oder Schweißen verbunden. Die Hartlöt- oder Schweißverbindung ergibt eine Stumpfnaht, die sich vorzugsweise ohne Unterbrechung über die gesamte Länge der beiden Endkanten 22 und 24 erstreckt.

Im dargestellten Beispiel ist das Eckstück 34 durch zwei im rechten Winkel zu ihm und zueinander angeordnete Stege 38 versteift, die miteinander sowie mit je einem der Stege 26 und 28 verlötet oder verschweißt und ihrerseits durch je eine Abkantung 40 versteift sind. Das Eckstück 34 hat auf der Winkelhalbierenden seines der Basis 36 gegenüberliegenden Winkels ein Loch 42 zum Verschrauben mit einem entsprechenden Eckstück des nicht dargestellten anschließenden Blechkanalformstücks.

Die beiden in Fig. 1 dargestellten U-förmigen Blechkanalformstücke 10 sind mit zwei zwischen ihnen angeordneten flachen Zwischenstücken 44 verschraubt. Zu diesem Zweck sind die Blechkanalformstücke 10 sowie die Zwischenstücke 44 mit Längsflanschen 46 bzw. 48 versehen, die sich im rechten Winkel zu den Kanalwänden 14 und den Flanschen 18 erstrecken.

Die Eckstücke 34 können, anstatt in der dargestellten Weise scharfkantig ausgebildet zu sein, eine Abrundung 50 aufweisen, die in Fig. 2 mit einem strichpunktierten Kreisbogen angedeutet ist.

## Patentansprüche

1. Blechkanalformstück mit mindestens zwei übereck angeordneten Kanalwänden (12, 14) und aus diesen stirnseitig nach außen abgekanteten Flanschen (16, 18), die in einer gemeinsamen Ebene liegen und durch je eine Endkante (22, 24) begrenzt sind, sowie einem Eckstück (34), das eine Lücke zwischen benachbarten Flanschen (16, 18) ausfüllt und mit jedem von ihnen an dessen Endkante (22 bzw. 24) verlötet oder verschweißt ist,
dadurch **gekennzeichnet,** daß die Endkanten (22, 24) benachbarter Flansche (16, 18) mit den Ebenen der zugehörigen Kanalwände (12, 14) je einen spitzen Winkel (β) einschließen und auf einer gemeinsamen Geraden liegen.

2. Blechkanalformstück nach Anspruch 1,
dadurch **gekennzeichnet,** daß das Eckstück (34) die Grundform eines gleichschenkligen Dreiecks hat.

## Claims

1. A plate duct fitting comprising at least two duct walls (12, 14) positioned at an angle and flanges (16, 18) which are bent outwardly from the face ends of the walls, lie in a common plane, and are defined each by an end edge (22, 24), and further comprising a corner piece (34) which fills a gap between adjacent flanges (16, 18) and is soldered or welded to each of them at the respective end edge (22 or 24) thereof, **characterized** in that the end edges (22, 24) of adjacent flanges (16, 18) form an acute angle (β) each with the planes of the associated duct walls (12, 14) and lie on a common straight line.

2. The plate duct fitting as claimed in claim 1, characterized in that the corner piece (34) has the basic configuration of an isosceles triangle.

## Revendications

1. Pièce profilée pour gaine en tôle, comprenant au moins deux parois (12, 14) agencées en coin, et deux brides (16, 18) repliées à partir de ces parois vers l'extérieur à l'extrémité de celles-ci, lesdites brides étant situées dans un plan commun et étant délimitées chacune par une arête terminale (22, 24), et comprenant une pièce de coin (34) qui remplit un intervalle entre les brides voisines (16, 18) et qui est soudée ou brasée avec chacune de celles-ci au niveau de son arête terminale (22, 24), caractérisée en ce que les arêtes terminales (22, 24) des brides voisines (16, 18) forment chacune un angle aigu (β) avec les plans des parois associées (12, 14) de la gaine, et sont situées sur une droite commune.

2. Pièce profilée pour gaine en tôle selon la revendication 1, caractérisée en ce que la pièce de coin (34) a la forme de base d'un triangle isocèle.
